(19)

**Europäisches Patentamt**

**European Patent Office**

**Office européen des brevets**

(11) **EP 3 425 702 B1**

(12) **EUROPEAN PATENT SPECIFICATION**

(45) Date of publication and mention of the grant of the patent:
**29.06.2022 Bulletin 2022/26**

(21) Application number: **17759399.3**

(22) Date of filing: **06.01.2017**

(51) International Patent Classification (IPC):
$H01M\ 4/525$ (2010.01)    $H01M\ 4/62$ (2006.01)
$H01M\ 10/052$ (2010.01)    $H01M\ 10/0566$ (2010.01)
$H01M\ 4/02$ (2006.01)

(52) Cooperative Patent Classification (CPC):
**H01M 4/525; H01M 4/131; H01M 4/505;
H01M 4/62; H01M 4/621; H01M 4/625;
H01M 10/052; H01M 10/0566;** H01M 2004/021;
H01M 2004/028; Y02E 60/10

(86) International application number:
**PCT/JP2017/000201**

(87) International publication number:
**WO 2017/149927 (08.09.2017 Gazette 2017/36)**

(54) **POSITIVE ELECTRODE FOR LITHIUM ION SECONDARY BATTERIES, AND LITHIUM ION SECONDARY BATTERY**

POSITIVELEKTRODE FÜR LITHIUM-IONEN-SEKUNDÄRBATTERIEN UND LITHIUM-IONEN-SEKUNDÄRBATTERIE

ÉLECTRODE POSITIVE POUR ACCUMULATEURS LITHIUM-ION ET ACCUMULATEUR LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2016 JP 2016040757**

(43) Date of publication of application:
**09.01.2019 Bulletin 2019/02**

(73) Proprietor: **Envision AESC Japan Ltd.
Kanagawa 2520012 (JP)**

(72) Inventor: **FUJISAWA Ai
Sagamihara-shi
Kanagawa 252-5298 (JP)**

(74) Representative: **Glawe, Delfs, Moll
Partnerschaft mbB von
Patent- und Rechtsanwälten
Postfach 13 03 91
20103 Hamburg (DE)**

(56) References cited:
**JP-A- H10 233 205**    **JP-A- 2008 016 267**
**JP-A- 2012 146 590**    **JP-A- 2012 243 645**
**JP-A- 2014 182 873**    **JP-A- 2014 182 873**
**JP-A- 2014 207 050**    **KR-A- 20150 064 697**

**Description**

TECHNICAL FIELD

The present invention relates to a positive electrode for a lithium-ion secondary battery and a lithium-ion secondary battery.

BACKGROUND ART

Lithium-ion secondary batteries are broadly used as a power supply for small mobile devices such as mobile phones or note-type personal computers due to their high energy density and excellent charge and discharge cycle characteristics. In addition, recently, the demand has risen even in fields of electric vehicles, hybrid electric vehicles, and power storage due to the intensification of care about environmental issues and perception of energy saving, and thus there has been demand for lithium-ion secondary batteries having a large capacity and a long service life.

Generally, a lithium-ion secondary battery is mainly constituted of a negative electrode including a carbon material capable of absorbing and emitting lithium ions as a negative electrode active material, a positive electrode including a lithium complex oxide capable of absorbing and emitting lithium ions as a positive electrode active material, a separator that separates the negative electrode and the positive electrode, and a non-aqueous electrolytic solution containing a lithium salt dissolved in a non-aqueous solvent.

For example, Patent Document 1 discloses a non-aqueous electrolytic solution secondary battery including a positive electrode mixture containing a positive electrode active material and a conductive substance, in which flake-shaped graphite powder obtained by forming graphite powder having an average particle diameter of 1 to 50 $\mu$m and a specific surface area of 5 to 50 m$^2$/g in a flake shape having a thickness of 1 $\mu$m or less is added as the conductive substance to the positive electrode mixture in a range of 0.5% to 9.5% by mass.

In addition, Patent Document 2 discloses a primary battery including a positive electrode mixture containing a positive electrode active material and a conductive substance, in which flake-shaped graphite powder having a thickness of 1 $\mu$m or less, an average particle diameter of 1 to 50 $\mu$m, and a specific surface area of 5 to 50 m$^2$/g is contained as the conductive substance.

Document JP 2014 182873 A is directed to a non-aqueous secondary battery electrode forming material comprising flake-shaped graphite.

RELATED DOCUMENT

PATENT DOCUMENT

[Patent Document 1] Japanese Unexamined Patent Publication No. H10-233205
[Patent Document 2] Japanese Unexamined Patent Publication No. H7-147159

SUMMARY OF THE INVENTION

TECHNICAL PROBLEM

According to the present inventors' studies, it has been clarified that lithium-ion secondary batteries for which the positive electrode described in Patent Document 1 or the like is used tend to have poor cycle characteristics.

The present invention has been made in consideration of the above-described circumstances and provides a positive electrode for a lithium-ion secondary battery enabling the realization of a lithium-ion secondary battery having excellent cycle characteristics and a lithium-ion secondary battery having excellent cycle characteristics.

SOLUTION TO PROBLEM

As a result of intensive studies, the present inventors found that the use of a conductive auxiliary agent satisfying a specific condition with respect to a positive electrode active material enables the obtainment of a positive electrode for a lithium-ion secondary battery capable of realizing a lithium-ion secondary battery having excellent cycle characteristics.

That is, according to the present invention,

there is provided a positive electrode for a lithium-ion secondary battery including a collector for a positive electrode and a positive electrode active material layer provided on the collector for a positive electrode,

in which the positive electrode active material layer includes a positive electrode active material, a conductive auxiliary agent, and a binder,

the conductive auxiliary agent includes flake-shaped graphite having an average thickness of 0.5 $\mu$m or less, and, when an average particle diameter of the positive electrode active material is represented by active material $D_{50}$, the average particle diameter of the flake-shaped graphite is equal to or more than (3 x active material $D_{50}$/5) and equal to or less than (9 x active material $D_{50}$/10).

In addition, according to the present invention,

there is provided a lithium-ion secondary battery including the positive electrode for a lithium-ion secondary battery, a negative electrode, and a non-aqueous electrolytic solution.

ADVANTAGEOUS EFFECTS OF INVENTION

According to the present invention, it is possible to provide a lithium-ion secondary battery having excellent cycle characteristics and a positive electrode preferable for the lithium-ion secondary battery.

BRIEF DESCRIPTION OF THE DRAWINGS

The above-described object and other objects, characteristics, and advantages will be further clarified using preferred embodiment described below and the accompanying drawings below.

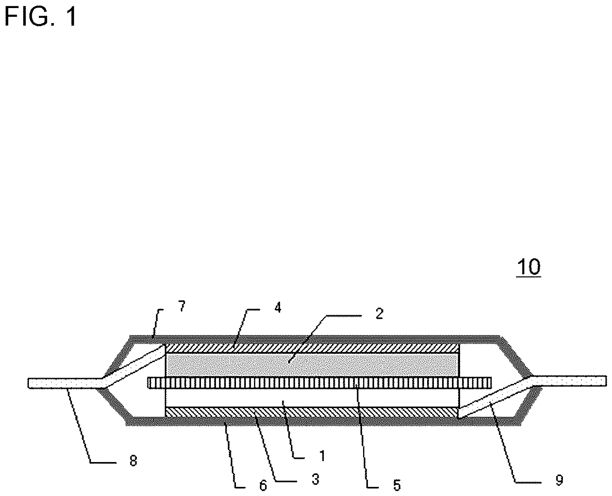

FIG. 1 is a cross-sectional view showing an example of a structure of a lithium-ion secondary battery of an embodiment according to the present invention.

DESCRIPTION OF EMBODIMENTS

Hereinafter, an embodiment of the present invention will be described using drawings. Meanwhile, individual constituent elements in the drawings schematically show shapes, sizes, and positional relationships so that the present invention can be understood, and thus the shapes, the sizes, and the positional relationships do not match actual ones. In addition, unless particularly otherwise described, a numerical range "A to B" indicates equal to and more than A and equal to and less than B.

<Positive Electrode for Lithium-Ion Secondary Battery>

A positive electrode for a lithium-ion secondary battery according to the present embodiment includes a collector for a positive electrode and a positive electrode active material layer provided on the collector for a positive electrode.
In addition, the positive electrode active material layer according to the present embodiment includes a positive electrode active material, a conductive auxiliary agent, and a binder, the conductive auxiliary agent includes flake-shaped graphite having an average thickness of 0.5 $\mu$m or less, and, when the average particle diameter of the positive electrode active material is represented by $D_{50}$, the average particle diameter of the flake-shaped graphite is equal to or more than (3 x active material $D_{50}$/5) and equal to or less than (9 x active material $D_{50}$/10).
Here, the average particle diameter (active material $D_{50}$) of the positive electrode active material refers to a particle diameter at a cumulative value of 50% (median diameter) in a (volume-based) particle size distribution obtained by a laser diffraction and scattering method.
In addition, the flake-shaped graphite is graphite having a flat plate shape. The shape of the flake-shaped graphite when seen on a plane may be any one of an elliptical shape including a circle, a polygonal shape, and an abnormal shape.
The average thickness of the flake-shaped graphite refers to the average value of the thicknesses of 50 or more flake-shaped graphite particles and can be obtained from a photograph captured using an electronic microscope (SEM).
Specifically, 50 or more flake-shaped graphite particles are captured using SEM. From the obtained SEM photographs, the thicknesses of the 50 or more flake-shaped graphite particles are measured respectively, and the average value thereof is considered as the average thickness of the flake-shaped graphite.
The average particle diameter of the flake-shaped graphite refers to a particle diameter at a cumulative value of 50% in a (volume-based) particle size distribution obtained by a laser diffraction and scattering method.
When the positive electrode for a lithium-ion secondary battery according to the present embodiment is used, it is possible to realize a lithium-ion secondary battery having excellent cycle characteristics.

The reason for enabling the realization of the above-described lithium-ion secondary battery is not clear, but is considered as follows.

First, when the average thickness of the flake-shaped graphite is set to equal to or less than 0.5 $\mu$m, the deforming property of the flake-shaped graphite becomes favorable, and the flake-shaped graphite can be deformed depending on the shape of the positive electrode active material, and thus it is possible to improve the density of the positive electrode active material layer.

In addition, when the average particle diameter of the flake-shaped graphite is set to be equal to or more than (3 x active material $D_{50}$/5) and equal to or less than (9 x active material $D_{50}$/10), the flake-shaped graphite can be deformed along the surface of the positive electrode active material, and it is possible to decrease an increase in the charge transfer resistance.

It is considered that a lithium-ion secondary battery having excellent cycle characteristics can be realized due to the synergistic effect of the above-described facts.

The lower limit value of the average thickness of the flake-shaped graphite is equal to or more than 0.05 $\mu$m from the viewpoint of handleability.

The positive electrode active material preferably includes a lithium complex oxide from the viewpoint of increasing the energy density of a lithium-ion secondary battery to be obtained. The positive electrode active material more preferably includes a lithium complex oxide containing nickel (lithium nickel complex oxide) and particularly preferably includes a lithium nickel complex oxide having a lamellar crystal structure.

The positive electrode active material layer according to the present embodiment may include an active material other than the lithium complex oxide, and, from the viewpoint of further increasing the energy density of a lithium-ion secondary battery to be obtained, the content of the lithium complex oxide in the positive electrode active material layer is preferably equal to or more than 80% by mass, more preferably equal to or more than 90% by mass, and still more preferably equal to or more than 95% by mass when the content of the positive electrode active material in the positive electrode active material layer is set to 100% by mass. In addition, from the viewpoint of further increasing the energy density of a lithium-ion secondary battery to be obtained, the content of the positive electrode active material in the positive electrode active material layer is preferably equal to or more than 80% by mass, more preferably equal to or more than 85% by mass, and still more preferably equal to or more than 90% by mass when the content of the entire positive electrode active material layer is set to 100% by mass.

In addition, from the viewpoint of further increasing the energy density of a lithium-ion secondary battery to be obtained, the lithium nickel complex oxide more preferably includes a compound represented by Formula (1)

$$Li_aNi_{1-x}M_xO_2 \qquad (1)$$

(In the formula, M represents at least one selected from Li, Co, Mn, Mg, and Al, $0<a\leq1$, $0<x<0.7$).

In the case of including the lithium nickel complex oxide, the positive electrode active material may also include a lithium manganese complex oxide having a spinel structure as another lithium complex oxide. The mixing ratio (mass ratio A:B) between the lithium nickel complex oxide having a lamellar crystal structure (A) and the lithium manganese complex oxide having a spinel structure (B) is preferably 80:20 to 95:5 and more preferably 90:10 to 95:5 from the viewpoint of obtaining a higher energy density while obtaining a sufficient mixing effect.

The average particle diameter (active material $D_{50}$) of the positive electrode active material is preferably equal to or more than 0.5 $\mu$m and equal to or less than 20 $\mu$m, more preferably equal to or more than 1 $\mu$m and equal to or less than 15 $\mu$m, and still more preferably equal to or more than 2 $\mu$m and equal to or less than 12 $\mu$m from the viewpoint of improving the performance balance between the energy density and the output characteristics (the discharge capacity when used at a high discharge rate) of a lithium-ion secondary battery to be obtained.

Here, the average particle diameter (active material $D_{50}$) of the positive electrode active material refers to a particle diameter at a cumulative value of 50% (median diameter: $D_{50}$) in a (volume-based) particle size distribution obtained by a laser diffraction and scattering method.

The positive electrode active material layer may also contain a conductive auxiliary agent other than the flake-shaped graphite. The conductive auxiliary agent other than the flake-shaped graphite is not particularly limited, and, for example, ordinarily-used conductive auxiliary agents such as carbon black, spherical graphite, or a carbon fiber can be used.

The conductive auxiliary agent other than the flake-shaped graphite preferably includes a conductive auxiliary agent constituted of spherical amorphous carbon particles and more preferably includes an agglomerate (secondary particles=primary agglomerate) of spherical amorphous carbon particles (primary particles). The above-described conductive auxiliary agent is preferably carbon black such as acetylene black or Ketjen black.

The average particle diameter of the carbon black in terms of the average particle diameter of the secondary particles (primary agglomerate) is preferably equal to or less than 3.5 $\mu$m, more preferably equal to or less than 3 $\mu$m, and still more preferably equal to or less than 2 $\mu$m and preferably equal to or more than 50 nm and more preferably equal to or more than 100 nm from the viewpoint of obtaining a positive electrode in which the contact resistance and the charge transfer resistance are suppressed while the positive electrode active material layer has a sufficient density. The average particle diameter of the primary particles is preferably in a range of equal to or more than 5 nm and equal to or less than 500 nm, more preferably in a range of equal to or more than 10 nm and equal to or less than 300 nm, and still more preferably in a range of equal to or more than 50 nm and equal to or less than 250 nm.

Here, the average particle diameter refers to a particle diameter at a cumulative value of 50% (median diameter: $D_{50}$) in a (volume-based) particle size distribution obtained by a laser diffraction and scattering method. When the average particle diameter of the conductive auxiliary agent is in the above-described range, the contact points between the conductive auxiliary agent and the positive electrode active material are more sufficiently formed, the conductive auxiliary agent is capable of following the expansion and contraction of the positive electrode active material at the charge and discharge cycle of a lithium-ion secondary battery to be obtained, and conduction paths can be ensured, and thus it is possible to further suppress an increase in the contact resistance and the charge transfer resistance, and consequently, a lithium-ion secondary battery having more favorable cycle characteristics can be obtained.

The proportion of the positive electrode active material in the positive electrode active material layer is preferably greater since the capacity per mass increases; however, from the viewpoint of a decrease in the resistance of the electrode, the conductive auxiliary agent is preferably added.

The content of the conductive auxiliary agent in the positive electrode active material layer is preferably equal to or more than 0.5% by mass and equal to or less than 10% by mass, more preferably equal to or more than 1.0% by mass and equal to or less than 8.0% by mass, and still more preferably equal to or more than 2.0% by mass and equal to or less than 6.0% by mass when the content of the entire positive electrode active material layer is set to 100% by mass.

When the content of the conductive auxiliary agent is equal to or less than the above-described upper limit value, the proportion of the positive electrode active material in a lithium-ion secondary battery to be obtained increases, and the capacity per mass increases or the peeling of the electrode is suppressed, which is preferable. When the content of the conductive auxiliary agent is equal to or more than the above-described lower limit value, the conductive property becomes more favorable, which is preferable.

In a case in which the conductive auxiliary agent further includes carbon black, the amount of the flake-shaped graphite blended is preferably equal to or more than 1 part by mass and equal to or less than 95 parts by mass, more preferably equal to or more than 5 parts by mass and equal to or less than 75 parts by mass, and still more preferably equal to or more than 10 parts by mass and equal to or less than 50 parts by mass when the total of the flake-shaped graphite and the carbon black is set to 100 parts by mass.

The positive electrode active material layer can be formed as described below. First, a slurry including the positive electrode active material, the conductive auxiliary agent, a binder, and a slurry solvent is prepared and applied and dried on a collector for the positive electrode, and the coating is pressed, whereby the positive electrode active material layer can be formed.

As the slurry solvent that is used to produce the positive electrode, for example, N-methyl-2-pyrrolidone (NMP) can be used.

The binder is not particularly limited, and it is possible to use, for example, binders that are ordinarily used as a binder for a positive electrode such as polytetrafluoroethylene (PTFE) or polyvinylidene fluoride (PVDF).

The proportion of the positive electrode active material in the positive electrode active material layer is preferably greater since the capacity per mass increases; however, from the viewpoint of the electrode strength, the binder is preferably added.

The content of the binder in the positive electrode active material layer is preferably equal to or more than 1% by mass and equal to or less than 15% by mass and more preferably equal to or more than 1% by mass and equal to or less than 10% by mass when the content of the entire positive electrode active material layer is set to 100% by mass from the viewpoint of satisfying both the energy density of a lithium-ion secondary battery to be obtained and the binding force of the binder.

When the content of the binder is equal to or less than the above-described upper limit value, the proportion of the positive electrode active material in a lithium-ion secondary battery to be obtained increases, and thus the capacity per mass increases or a resistance component is decreased, which is preferable. When the content of the binder is equal to or more than the above-described lower limit value, the peeling of the electrode is suppressed, which is preferable.

The thickness of the positive electrode active material layer is not particularly limited and can be appropriately set depending on desired characteristics. For example, the thickness can be set to be thick from the viewpoint of the energy density or can be set to be thin from the viewpoint of the output characteristics. The thickness of the positive electrode active material layer can be appropriately set in a range of equal to or more than 10 μm and equal to or less than 250 μm and is preferably equal to or more than 20 μm and equal to or less than 200 μm and more preferably equal to or more than 40 μm and equal to or less than 180 μm.

In addition, the density of the positive electrode active material layer is preferably equal to or more than 3.30 g/cm³ and more preferably equal to or more than 3.45 g/cm³ and equal to or less than 4.00 g/cm³. When the density of the positive electrode active material layer is in the above-described range, the performance balance between the energy density and the output characteristics of a lithium-ion secondary battery to be obtained is excellent, which is preferable.

As the collector for the positive electrode, it is possible to use aluminum, stainless steel, nickel, titanium, alloys thereof, and the like. Examples of the shape thereof include a foil shape, a flat plate shape, a mesh shape, and the like. Particularly, an aluminum foil can be preferably used.

<Lithium-Ion Secondary Battery>

Subsequently, a lithium-ion secondary battery 10 according to the present embodiment will be described. FIG. 1 is a cross-sectional view showing an example (laminate type) of the structure of the lithium-ion secondary battery 10 of the embodiment according to the present invention.

As shown in FIG. 1, the lithium-ion secondary battery 10 according to the present embodiment includes at least the positive electrode according to the present embodiment, a negative electrode capable of intercalating and deintercalating lithium, and a non-aqueous electrolytic solution. In addition, a separator 5 can be provided between the positive electrode and the negative electrode. A plurality of electrode pairs of the positive electrode and the negative electrode can be provided.

The lithium-ion secondary battery 10 has, for example, a positive electrode made up of a collector for a positive electrode 3 made of a metal such as an aluminum foil and a positive electrode active material layer 1 containing a positive electrode active material provided on the collector for a positive electrode and a negative electrode made up of a collector for a negative electrode 4 made of a metal such as a copper foil and a negative electrode active material layer 2 containing a negative electrode active material provided on the collector for a negative electrode.

The positive electrode and the negative electrode are laminated together through the separator 5 made of a non-woven fabric, a polypropylene microporous film, or the like so that, for example, the positive electrode active material layer 1 and the negative electrode active material layer 2 face each other. This electrode pair is stored in, for example, a container formed of exterior bodies 6 and 7 made of an aluminum laminate film. A positive electrode tab 9 is connected to the positive electrode collector 3, a negative electrode tab 8 is connected to the negative electrode collector 4, and these tabs are extracted to the outside of the container.

A non-aqueous electrolytic solution is injected into the container, and the container is sealed. It is also possible to provide a structure in which an electrode group obtained by laminating a plurality of electrode is stored in the container. Meanwhile, in the present embodiment, drawings are exaggeratedly expressed for the convenience of description, and the technical scope of the present invention is not limited to an aspect shown in the drawings.

The lithium-ion secondary battery 10 according to the present embodiment can be produced according to a well-known method.

As the electrode, it is possible to use, for example, a collector or a coiled body. As the exterior bodies, it is possible to appropriately use a metal exterior body or an aluminum laminate exterior body. The shape of the battery may be any one of a coin shape, a button shape, a sheet shape, a cylindrical shape, a square shape, a flat shape, and the like.

The negative electrode according to the present embodiment includes a negative electrode active material layer including a negative electrode active material and, as necessary, a binder and a conductive auxiliary agent.

In addition, the negative electrode according to the present embodiment includes, for example, a collector and the negative electrode active material layer provided on this collector.

As the negative electrode active material according to the present embodiment, it is possible to use a material capable of absorbing and emitting lithium such as a lithium metal, a carbon material, or a Si-based material. Examples of the carbon material include graphite, amorphous carbon, diamond-like carbon, fullerene, a carbon nanotube, a carbon nanohorn, and the like which absorb lithium. As the Si-based material, it is possible to use Si, $SiO_2$, $SiO_x$ ($0<x\leq2$), a Si-containing complex material, and the like. In addition, a complex including two or more kinds of the above-described materials may also be used.

In a case in which a lithium metal is used as the negative electrode active material, the negative electrode can be formed using an appropriate method such as a melt cooling method, a liquid quenching method, an atomize method, a vacuum deposition method, a sputtering method, a plasma CVD method, an optical CVD method, a thermal CVD method, or a sol-gel method.

In addition, in a case in which a carbonaceous material or a Si-based material is used as the negative electrode active material, the negative electrode can be obtained by mixing the carbonaceous material or the Si-based material and a binder, dispersing and kneading the components in a slurry solvent, applying and drying the obtained slurry on a collector for a negative electrode and, as necessary, pressing the coating. In addition, the negative electrode can be obtained by forming a negative electrode active material layer in advance and then forming a thin film which serves as a collector for a negative electrode using a method such as a deposition method, a CVD method, or a sputtering method. The negative electrode produced in the above-described manner has the collector for a negative electrode and the negative electrode active material layer formed on the collector.

The average particle diameter of the negative electrode active material is preferably equal to or more than 1 $\mu$m, more preferably equal to or more than 2 $\mu$m, and still more preferably equal to or more than 5 $\mu$m from the viewpoint of suppressing a decrease in the charge and discharge efficiency by suppressing a side reaction during charging and discharging and is preferably equal to or less than 80 $\mu$m and more preferably equal to or less than 40 $\mu$m from the viewpoint of the input and output characteristics and the viewpoint of electrode production (the flatness of the electrode surface or the like). Here, the average particle diameter refers to a particle diameter at a cumulative value of 50% (median diameter: $D_{50}$) in a (volume-based) particle size distribution obtained by a laser diffraction and scattering method.

The negative electrode active material layer may also contain a conductive auxiliary agent or a binder as necessary.

As the conductive auxiliary agent for the negative electrode, it is possible to use a conductive material that is generally used as a conductive auxiliary agent of a negative electrode such as a carbonaceous material such as carbon black, Ketjen black, or acetylene black.

The binder for the negative electrode is not particularly limited, and examples thereof include polyvinylidene fluoride (PVdF), a vinylidene fluoride-hexafluoropropylene copolymer, a vinylidene fluoride-tetrafluoroethylene copolymer, a styrene-butadiene copolymer rubber, polytetrafluoroethylene, polypropylene, polyethylene, polyimide, polyamide-imide, polymethyl (meth)acrylate, polyethyl (meth)acrylate, polybutyl (meth)acrylate, poly(meth)acrylonitrile, isoprene rubber, butadiene rubber, fluorine rubber, and the like.

As the slurry solvent, it is possible to use N-methyl-2-pyrrolidone (NMP) or water. In a case in which water is used as the solvent, furthermore, carboxymethyl cellulose, methyl cellulose, hydroxymethyl cellulose, ethyl cellulose, polyvinyl alcohol, or the like can be used as a thickener.

The content of the binder for the negative electrode is preferably in a range of equal to or more than 0.5% by mass and equal to or less than 30% by mass, more preferably in a range of equal to or more than 0.5% by mass and equal to or less than 25% by mass, and still more preferably in a range of equal to or more than 1% by mass and equal to or less than 20% by mass when the content of the entire negative electrode active material layer is set to 100% by mass from the viewpoint of the binding force and the energy density which have a trade-off relationship.

As the collector for a negative electrode, copper, stainless steel, nickel, titanium, or alloys thereof can be used.

As the non-aqueous electrolytic solution, it is possible to use an electrolytic solution obtained by dissolving a lithium salt in one or more kind of non-aqueous solvents.

Examples of the non-aqueous solvent include cyclic carbonates such as ethylene carbonate (EC), propylene carbonate (PC), vinylene carbonate (VC), and butylene carbonate (BC); chain-like carbonates such as ethyl methyl carbonate (EMC), diethyl carbonate (DEC), dimethyl carbonate (DMC), and dipropyl carbonate (DPC); aliphatic carboxylic acid esters such as methyl formate, methyl acetate, and ethyl propionate; $\gamma$-lactones such as $\gamma$-butyrolactone; chain-like ethers such as 1,2-ethoxyethane (DEE) and ethoxymethoxyethane (EME); and cyclic ethers such as tetrahydrofuran and 2-methyltetrahydrofuran. One kind of the non-aqueous solvent can be used singly or a mixture of two or more kinds of the non-aqueous solvents can be used.

The lithium salt that is dissolved in the non-aqueous solvent is not particularly limited, and examples thereof include $LiPF_6$, $LiAsF_6$, $LiAlCl_4$, $LiClO_4$, $LiBF_4$, $LiSbF_6$, $LiCF_3SO_3$, $LiCF_3CO_2$, $Li(CF_3SO_2)_2$, $LiN(CF_3SO_2)_2$, and lithium bisoxalatoborate.

One kind of the lithium salt can be used singly or two or more kinds of the lithium salts can be used in combination. In addition, as a non-aqueous electrolyte, a polymer component may be included. The concentration of the lithium salt can be set, for example, in a range of 0.8 to 1.2 mol/L and is preferably 0.9 to 1.1 mol/L.

As the separator, it is possible to use, for example, a resin porous film, a woven fabric, a non-woven fabric, or the like. Examples of the resin constituting the porous film include a polyolefin resin such as polypropylene or polyethylene, a polyester resin, an acrylic resin, a styrene resin, a nylon resin, and the like. Particularly, a polyolefin-based microporous film is preferred due to its excellent ion-transmitting property and its excellent performance that physically separate the positive electrode and the negative electrode. In addition, as necessary, a layer including a different kind of material in a resin layer of a polyolefin or the like may also be formed, and examples of the different kind of material include a fluorine compound, inorganic particles, and an aramid layer.

As an exterior container, a case, a can case, or the like which is made of a flexible film can be used, and, from the viewpoint of the weight reduction of a battery, a flexible film is preferably used.

As the flexible film, it is possible to use a flexible film obtained by providing resin layers on the front and rear surfaces of a metal layer which serves as a base material. As the metal layer, a metal layer having a barrier property so as to prevent the leakage of the electrolytic solution or the intrusion of moisture from the outside can be selected, and aluminum, stainless steel, or the like can be used. On at least one surface of the metal layer, for example, a thermally fusible resin layer such as modified polyolefin is provided. The exterior container is formed by placing the thermally fusible resin layers in the flexible film opposite to each other and thermally fusing the periphery of a portion in which an electrode laminate is stored. On the surface of the exterior body which is a surface opposite to the surface on which the thermally fusible resin layer is formed, a resin layer such as a nylon film or a polyester film can be provided.

In the production of the electrode, as an apparatus for forming the active material layer on the collector, it is possible to use an apparatus that carries out a variety of application methods such as a doctor blade, a die coater, a gravure coater, a transfer method, or a deposition method or a combination of these application apparatuses.

In order to precisely form the application end portion of the active material, a die coater is particularly preferably used. Methods for applying the active material using a die coater are roughly classified into two kinds of application methods, that is, a continuous application method in which the active material is continuously formed along the longitudinal direction of a long collector and an intermittent application method in which active material-applied portions and active material-non-applied portions are alternately and repetitively formed along the longitudinal direction of a long collector, and these methods can be appropriately selected.

Hitherto, the embodiment of the present invention has been described with reference to the drawings, but this is an example of the present invention, and it is also possible to employ a variety of constitution other than what has been described above.

[Examples]

Hereinafter, the present invention will be described using examples and comparative examples. Meanwhile, the present invention is not limited thereto.

(Example 1)

A lithium nickel complex oxide having a lamellar crystal structure ($LiNi_{0.8}Co_{0.1}Mn_{0.1}O_2$) (average particle diameter (active material $D_{50}$): 8 $\mu$m) was used as a positive electrode active material, flake-shaped graphite 1 (average thickness: 0.2 $\mu$m, average particle diameter $D_{50}$: 7 $\mu$m) and carbon black (acetylene black, secondary particle diameter Dso=2.5 $\mu$m, primary particle diameter $D_{50}$=150 nm) were used as conductive auxiliary agents, and polyvinylidene fluoride (PVDF) was used as a binder, and these components were mixed together so that the mass ratio among the positive electrode active material, the conductive auxiliary agent (the flake-shaped graphite and the carbon black), and the binder reached 93:4(1:3):3 and dispersed in an organic solvent, thereby preparing a slurry. The slurry was applied and dried on a collector for a positive electrode (aluminum foil), thereby forming a positive electrode active material layer 1. The obtained positive electrode was rolled at a certain linear pressure using a roll pressing machine, and the density of the positive electrode active material layer at this time was measured (evaluation of the deforming property).

In addition, the positive electrode active material layer was rolled to a predetermined density, thereby obtaining a positive electrode for characteristic evaluation having a thickness of 140 $\mu$m.

As a negative electrode active material, graphite having a surface coated with amorphous carbon was used, PVDF was used as a binder, and these components were mixed together and dispersed in an organic solvent, thereby preparing a negative electrode slurry. This slurry was applied and dried on a collector for a negative electrode (copper foil) so as to form a negative electrode active material layer 2, thereby obtaining a negative electrode.

The produced positive electrode for characteristic evaluation and the negative electrode were alternately laminated through a separator made of polypropylene having a thickness of 25 $\mu$m. A negative electrode terminal and a positive electrode terminal were attached to this laminate, the laminate was stored in an exterior container made of an aluminum laminate film, an electrolytic solution in which a lithium salt was dissolved was added thereto, and the container was sealed, thereby obtaining a laminate-type lithium-ion secondary battery. For the obtained lithium-ion secondary battery, the charge transfer resistance (the evaluation of the positive electrode) and the capacity retention (the evaluation of the cycle characteristics) were measured.

Meanwhile, as a solvent in the electrolytic solution, a liquid mixture of EC and DEC (EC/DEC=3/7 (volume ratio)) was used, and, as the lithium salt, 1 mol/L of $LiPF_6$ was dissolved in this solvent mixture.

(Example 2)

The deforming property was evaluated in the same manner as in Example 1 except for the fact that flake-shaped graphite 2 (average thickness: 0.3 $\mu$m, average particle diameter $D_{50}$: 6 $\mu$m) was applied instead of the flake-shaped graphite 1, and a lithium-ion secondary battery was produced in the same manner as in Example 1 using the positive electrode for characteristic evaluation. For the obtained lithium-ion secondary battery, the charge transfer resistance (the evaluation of the positive electrode) and the capacity retention (the evaluation of the cycle characteristics) were measured.

(Example 3)

The deforming property was evaluated in the same manner as in Example 1 except for the fact that flake-shaped graphite 3 (average thickness: 0.4 $\mu$m, average particle diameter $D_{50}$: 6 $\mu$m) was applied instead of the flake-shaped graphite 1, and a lithium-ion secondary battery was produced in the same manner as in Example 1 using the positive electrode for characteristic evaluation. For the obtained lithium-ion secondary battery, the charge transfer resistance (the evaluation of the positive electrode) and the capacity retention (the evaluation of the cycle characteristics) were measured.

(Comparative Example 1)

The deforming property was evaluated in the same manner as in Example 1 except for the fact that flake-shaped graphite 4 (average thickness: 0.6 $\mu$m, average particle diameter $D_{50}$: 6 $\mu$m) was applied instead of the flake-shaped graphite 1, and a lithium-ion secondary battery was produced in the same manner as in Example 1 using the positive electrode for characteristic evaluation. For the obtained lithium-ion secondary battery, the charge transfer resistance (the evaluation of the positive electrode) and the capacity retention (the evaluation of the cycle characteristics) were measured.

(Comparative Example 2)

The deforming property was evaluated in the same manner as in Example 1 except for the fact that flake-shaped graphite 5 (average thickness: 1.0 $\mu$m, average particle diameter $D_{50}$: 6 $\mu$m) was applied instead of the flake-shaped graphite 1, and a lithium-ion secondary battery was produced in the same manner as in Example 1 using the positive electrode for characteristic evaluation. For the obtained lithium-ion secondary battery, the charge transfer resistance (the evaluation of the positive electrode) and the capacity retention (the evaluation of the cycle characteristics) were measured.

(Comparative Example 3)

The deforming property was evaluated in the same manner as in Example 1 except for the fact that flake-shaped graphite 6 (average thickness: 0.3 $\mu$m, average particle diameter $D_{50}$: 4 $\mu$m) was applied instead of the flake-shaped graphite 1, and a lithium-ion secondary battery was produced in the same manner as in Example 1 using the positive electrode for characteristic evaluation. For the obtained lithium-ion secondary battery, the charge transfer resistance (the evaluation of the positive electrode) and the capacity retention (the evaluation of the cycle characteristics) were measured.

(Comparative Example 4)

The deforming property was evaluated in the same manner as in Example 1 except for the fact that flake-shaped graphite 7 (average thickness: 0.3 $\mu$m, average particle diameter $D_{50}$: 9 $\mu$m) was applied instead of the flake-shaped graphite 1, and a lithium-ion secondary battery was produced in the same manner as in Example 1 using the positive electrode for characteristic evaluation. For the obtained lithium-ion secondary battery, the charge transfer resistance (the evaluation of the positive electrode) and the capacity retention (the evaluation of the cycle characteristics) were measured.

(Comparative Example 5)

The deforming property was evaluated in the same manner as in Example 1 except for the fact that flake-shaped graphite 8 (average thickness: 1.0 $\mu$m, average particle diameter $D_{50}$: 11 $\mu$m) was applied instead of the flake-shaped graphite 1, and a lithium-ion secondary battery was produced in the same manner as in Example 1 using the positive electrode for characteristic evaluation. For the obtained lithium-ion secondary battery, the charge transfer resistance (the evaluation of the positive electrode) and the capacity retention (the evaluation of the cycle characteristics) were measured.

<Evaluation>

(Determination of Density of Positive Electrode Active Material Layer)

The density of the positive electrode active material layer refers to the mass of the positive electrode active material layer per unit volume of the positive electrode active material layer. Therefore, the density was obtained from the thickness and the mass per unit area of the positive electrode active material layer according to the following expression.

$$\text{Density (g/cm}^3\text{) of positive electrode active material layer}=(\text{mass of positive electrode active material layer})/(\text{apparent volume of positive electrode active material layer})$$

(Measurement of Charge Transfer Resistance)

The obtained lithium-ion secondary battery was charged up to 4.15 V, the impedance was measured using a frequency response analyzer and a potentio/Galvanostat, and the charge transfer resistance was computed.

(Measurement of Capacity Retention)

On the obtained lithium-ion secondary battery, a cycle experiment was carried out under the following conditions. Conditions: CC-CV charging (upper limit voltage: 4.15 V, current: 1 C, CV time: 1.5 hours), CC discharging (lower limit voltage: 2.5 V, current: 1 C), ambient temperature during charging and discharging: 45°C

The proportion of the discharge capacity at the 500th cycle in the discharge capacity at the first cycle was considered as the capacity retention.

[Table 1]

| | Average thickness of flake-shaped graphite ($\mu$m) | Average particle diameter of flake-shaped graphite ($\mu$m) | Charge transfer resistance (m$\Omega$) | Density of positive electrode active material layer at same linear pressure (g/cm$^3$) | Capacity retention (%) |
|---|---|---|---|---|---|
| Example 1 | 0.2 | 7 | 270 | 3.60 | 96 |
| Example 2 | 0.3 | 6 | 300 | 3.59 | 96 |
| Example 3 | 0.4 | 6 | 300 | 3.58 | 95 |
| Comparative Example 1 | 0.6 | 6 | 400 | 3.44 | 90 |
| Comparative Example 2 | 1.0 | 6 | 420 | 3.40 | 90 |
| Comparative Example 3 | 0.3 | 4 | 500 | 3.55 | 73 |
| Comparative Example 4 | 0.3 | 9 | 700 | 3.58 | 70 |
| Comparative Example 5 | 1.0 | 11 | 800 | 3.35 | 50 |

In Comparative Examples 1, 2, and 5, the average thickness of the flake-shaped graphite was equal to or more than 0.5 $\mu$m, and thus the deforming property of the flake-shaped graphite was poor, the density of the positive electrode active material layer did not increase compared with those in the examples, and the number of the contact points between the positive electrode active material and the flake-shaped graphite was also small, and thus it is found that the charge transfer resistance was high and the capacity retention was also low.

In Comparative Examples 3, 4, and 5, the average particle diameter of the flake-shaped graphite was outside of the range of equal to or more than (3 x active material $D_{50}/5$) and equal to or less than (9 x active material $D_{50}/10$), and thus it is found that the charge transfer resistance was larger and the capacity retention was also lower than those in the examples.

A positive electrode having a high electrode density is obtained by deforming flake-shaped graphite having a specific average thickness (equal to or less than 0.5 $\mu$m), and, furthermore, the surface of a positive electrode active material is favorably coated with flake-shaped graphite having a specific average particle diameter (equal to or more than (3 x active material $D_{50}/5$) and equal to or less than (9 x active material $D_{50}/10$)) represented by the average particle diameter ($D_{50}$) of the positive electrode active material, and thus a positive electrode having a decreased charge transfer resistance can be obtained. When the above-described positive electrode is used, it is possible to provide a lithium-ion secondary battery having a high energy density and favorable cycle characteristics.

Priority is claimed on the basis of Japanese Patent Application No. 2016-040757, filed on March 3, 2016.

**Claims**

1. A positive electrode for a lithium-ion secondary battery, comprising:

   a collector for a positive electrode; and
   a positive electrode active material layer provided on the collector for a positive electrode,
   wherein the positive electrode active material layer includes a positive electrode active material, a conductive auxiliary agent, and a binder,
   the conductive auxiliary agent includes flake-shaped graphite having an average thickness of 0,05 $\mu$m or more and 0.5 $\mu$m or less, and
   when an average particle diameter of the positive electrode active material is represented by active material $D_{50}$, the average particle diameter of the flake-shaped graphite is equal to or more than (3 x active material $D_{50}/5$) and equal to or less than (9 x active material $D_{50}/10$).

2. The positive electrode for a lithium-ion secondary battery according to Claim 1,
   wherein the conductive auxiliary agent further includes carbon black having an average particle diameter of primary particles being equal to or more than 5 nm and equal to or less than 500 nm.

3. The positive electrode for a lithium-ion secondary battery according to Claim 1 or 2,
   wherein the positive electrode active material includes a lithium complex oxide.

4. The positive electrode for a lithium-ion secondary battery according to Claim 3,
   wherein the lithium complex oxide includes a lithium nickel complex oxide having a lamellar crystal structure.

5. The positive electrode for a lithium-ion secondary battery according to Claim 3 or 4,

   wherein the lithium complex oxide includes a compound represented by Formula (1),

   $$Li_aNi_{1-x}M_xO_2 \qquad (1)$$

   (in the formula, M represents at least one selected from Li, Co, Mn, Mg, and Al, $0<a\leq1$, $0<x<0.7$).

6. The positive electrode for a lithium-ion secondary battery according to any one of Claims 1 to 5,
   wherein a density of the positive electrode active material layer is equal to or more than 3.30 g/cm$^3$.

7. The positive electrode for a lithium-ion secondary battery according to any one of Claims 1 to 6,
   wherein an average particle diameter ($D_{50}$) of the positive electrode active material is equal to or more than 0.5 $\mu$m and equal to or less than 20 $\mu$m.

8. A lithium-ion secondary battery comprising:

   the positive electrode for a lithium-ion secondary battery according to any one of Claims 1 to 7;
   a negative electrode; and
   a non-aqueous electrolytic solution.

**Patentansprüche**

1. Positive Elektrode für eine Lithiumionen-Sekundärbatterie mit:

   einem Kollektor für eine positive Elektrode und
   einer Positivelektroden-Aktivmaterialschicht, die auf dem Kollektor für eine positive Elektrode vorgesehen ist,
   wobei die Positivelektroden-Aktivmaterialschicht ein Positivelektroden-Aktivmaterial, ein leitfähiges Hilfsagens und einen Binder umfasst,
   wobei das leitfähige Hilfsagens plättchenförmiges Graphit mit einer mittleren Dicke von 0,05 $\mu$m oder mehr und 0,5 $\mu$m oder weniger enthält, und
   wobei, wenn ein mittlerer Partikeldurchmesser des Positivelektroden-Aktivmaterials durch Aktivmaterial $D_{50}$ gegeben ist, der mittlere Partikeldurchmesser des plättchenförmigen Graphits gleich oder mehr als (3 x Aktivmaterial $D_{50}$/5) und gleich oder weniger als (9 x Aktivmaterial $D_{50}$/10) beträgt.

2. Positive Elektrode für eine Lithiumionen-Sekundärbatterie nach Anspruch 1,
   wobei das leitfähige Hilfsagens ferner Ruß mit einem mittleren Durchmesser von Primärpartikeln von gleich oder mehr als 5 nm und gleich oder weniger als 500 nm umfasst.

3. Positive Elektrode für eine Lithiumionen-Sekundärbatterie nach Anspruch 1 oder 2,
   wobei das Positivelektroden-Aktivmaterial ein Lithiumkomplex-Oxid aufweist.

4. Positive Elektrode für eine Lithiumionen-Sekundärbatterie nach Anspruch 3, wobei
   das Lithiumkomplex-Oxid ein Lithium-Nickel-Komplex-Oxid mit einer lamellaren Kristall struktur aufweist.

5. Positive Elektrode für eine Lithiumionen-Sekundärbatterie nach Anspruch 3 oder 4,

   wobei das Lithiumkomplex-Oxid eine Verbindung aufweist, die durch die Formel (1) gegeben ist,

   $$LiaNi1-xMxO2 \qquad (1)$$

   (wobei in der Formel M zumindest eines repräsentiert, das ausgewählt ist aus Co, Mn, Mg und Al, 0<a $\leq$1, 0<x<0,7).

6. Positive Elektrode für eine Lithiumionen-Sekundärbatterie nach einem der Ansprüche 1 bis 5,
   wobei die Dichte der Positivelektroden-Aktivmaterialschicht gleich oder mehr als 3,30 g/cm$^3$ beträgt.

7. Positivelektrode für eine Lithiumionen-Sekundärbatterie nach einem der Ansprüche 1 bis 6,
   wobei der mittlere Partikeldurchmesser (D50) des Positivelektroden-Aktivmaterials gleich oder mehr als 0,5 $\mu$m und gleich oder weniger als 20 $\mu$m beträgt.

8. Lithiumionen-Sekundärbatterie mit:

   der positiven Elektrode für eine Lithiumionen-Sekundärbatterie nach einem der Ansprüche 1 bis 7,
   einer negativen Elektrode und
   einer nichtwässrigen Elektrolytlösung.

**Revendications**

1. Electrode positive pour un accumulateur lithium-ion, comprenant :

   un collecteur pour une électrode positive ; et
   une couche de matériau actif d'électrode positive prévue sur le collecteur pour une électrode positive,
   dans laquelle la couche de matériau actif d'électrode positive comporte un matériau actif d'électrode positive, un agent auxiliaire conducteur et un agent liant,
   l'agent auxiliaire conducteur comporte du graphite en forme de flocons présentant une épaisseur moyenne de 0,05 $\mu$m ou plus et 0,5 $\mu$m ou moins ; et
   lorsqu'un diamètre moyen de particule du matériau actif d'électrode positive est représenté par $D_{50}$ de matériau

actif, le diamètre moyen de particule du graphite en forme de flocons est supérieur ou égal à (3 x $D_{50}$ de matériau actif/5) et inférieur ou égal à (9 x $D_{50}$ de matériau actif/10).

2. Electrode positive pour un accumulateur lithium-ion selon la revendication 1,
   dans laquelle l'agent auxiliaire conducteur comporte en outre du noir de carbone présentant un diamètre moyen de particule de particules primaires étant supérieur ou égal à 5 nm et inférieur ou égal à 500 nm.

3. Electrode positive pour un accumulateur lithium-ion selon la revendication 1 ou 2,
   dans laquelle le matériau actif d'électrode positive comporte un oxyde complexe de lithium.

4. Electrode positive pour un accumulateur lithium-ion selon la revendication 3,
   dans laquelle l'oxyde complexe de lithium comporte un oxyde complexe de lithium et de nickel présentant une structure cristalline lamellaire.

5. Electrode positive pour un accumulateur lithium-ion selon la revendication 3 ou 4,

   dans laquelle l'oxyde complexe de lithium comporte un composé représenté par la formule (1) :

   $$Li_aNi_{1-x}M_xO_2 \qquad (1)$$

   (dans la formule, M représente au moins l'un sélectionné parmi Li, Co, Mn, Mg et Al, $0<a\leq1$, $0<x<0,7$).

6. Electrode positive pour un accumulateur lithium-ion selon l'une quelconque des revendications 1 à 5,
   dans laquelle une densité de la couche de matériau actif d'électrode positive est supérieure ou égale à 3,30 g/cm$^3$.

7. Electrode positive pour un accumulateur lithium-ion selon l'une quelconque des revendications 1 à 6,
   dans laquelle un diamètre moyen de particule ($D_{50}$) du matériau actif d'électrode positive est supérieur ou égal à 0,5 $\mu$m et inférieur ou égal à 20 $\mu$m.

8. Accumulateur lithium-ion comprenant :

   l'électrode positive pour un accumulateur lithium-ion selon l'une quelconque des revendications 1 à 7 ;
   une électrode négative ; et
   une solution électrolytique non aqueuse.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014182873 A
- JP H10233205 A
- JP H7147159 A
- JP 2016040757 A